(19) **Europäisches Patentamt**

**European Patent Office**

**Office européen des brevets**

(11) **EP 1 280 977 B1**

(12) **EUROPÄISCHE PATENTSCHRIFT**

(45) Veröffentlichungstag und Bekanntmachung des Hinweises auf die Patenterteilung:
**12.07.2006 Patentblatt 2006/28**

(21) Anmeldenummer: **01936330.8**

(22) Anmeldetag: **07.05.2001**

(51) Int Cl.:
**E21B 47/09** (2006.01) **G01V 3/08** (2006.01)

(86) Internationale Anmeldenummer:
**PCT/EP2001/005157**

(87) Internationale Veröffentlichungsnummer:
**WO 2001/086116 (15.11.2001 Gazette 2001/46)**

(54) **MESSVORRICHTUNG ZUR ERFASSUNG EINES SICH RELATIV ZU EINEM ROHRFÖRMIGEN BEHÄLTER BEWEGENDEN KÖRPERS**

MEASURING DEVICE FOR DETECTING A BODY MOVING IN RELATION TO A TUBULAR CONTAINER

DISPOSITIF DE MESURE DESTINÉ À DÉTECTER UN CORPS SE DEPLAÇANT PAR RAPPORT À UN RÉCIPIENT TUBULAIRE

(84) Benannte Vertragsstaaten:
**DE FR GB IE IT NL**

(30) Priorität: **11.05.2000 DE 20008413 U**

(43) Veröffentlichungstag der Anmeldung:
**05.02.2003 Patentblatt 2003/06**

(73) Patentinhaber: **Cooper Cameron Corporation Houston, Texas 77027-9109 (US)**

(72) Erfinder:
• **BIESTER, Klaus**
  **29342 Wienhausen (DE)**
• **KUNOW, Peter**
  **12355 Berlin (DE)**

(74) Vertreter: **Grünecker, Kinkeldey, Stockmair & Schwanhäusser Anwaltssozietät Maximilianstrasse 58 80538 München (DE)**

(56) Entgegenhaltungen:
| | |
|---|---|
| **US-A- 3 513 912** | **US-A- 4 088 946** |
| **US-A- 4 968 934** | **US-A- 5 323 856** |
| **US-A- 5 666 050** | **US-A- 6 047 783** |

**Beschreibung**

Die Erfindung betrifft eine Messvorrichtung zur Erfassung eines sich relativ zu einem, insbesondere rohrfömigen Behältnis bewegenden Körpers mit jeweils wenigstens einer dem Behältnis und/oder dem Körper zugeordneten magnetfeld-erzeugenden und magnetfeld-messenden Magneteinheit und zumindest einer mit den Magneteinheiten verbundenen Auswerteeinrichtung zum Empfang von Messsignalen der Magneteinheiten.

Eine solche Messvorrichtung ist aus der US-A-3 103 976 bekannt. Diese Messvorrichtung wird zur Lokalisierung von Rohren und insbesondere deren Enden zur gegenseitigen Verbindung bei Unterwasserbohrungen und dgl. eingesetzt. Ein sich zwischen einem Bohrturm und einem auf dem Meeresgrund befestigten Rahmenteil erstreckendes Führungsrohr als Behältnis weist im Bereich des Rahmenteils auf seiner Außenseite eine Spule als magnetfeld-erzeugende Magneteinheit und zwei jeweils ober- und unterhalb von dieser Spule angeordnete Messspulen als magnetfeld-messende Magneteinheiten auf. Die verschiedenen Spulen sind über elektrische Leitungen mit einer Auswerteeinheit im Bereich des Bohrturms an der Meeresoberfläche verbunden. Die magnetfeld-erzeugende Spule erzeugt ein Magnetfeld innerhalb des Führungsrohres, das im wesentlichen in Längsrichtung des Rohres gerichtet ist. Dieses Magnetfeld durchsetzt ebenfalls die beiden magnetfeld-messenden Spulen. Wird dann innerhalb des Führungsrohrs ein Bohrgestänge, ein Werkzeug, ein Rohr oder dgl. verschoben, ändert sich das Magnetfeld je nach Position dieses sich bewegenden Körpers in den magnetfeld-messenden Spulen, was zu einer entsprechenden Induktion in diesen Spulen führt. Dadurch ist feststellbar, wann dieser Körper entsprechend eine dieser das magnetfeld-messenden Spulen oder beispielsweise, wann der Körper das am Meeresboden befindliche Ausblasventil erreicht.

Bei der vorbekannten Messvorrichtung ist es allerdings nur möglich, im wesentlichen die Position eines vorderen Endes des sich bewegenden Körpers festzustellen, wobei die Genauigkeit der Positionserfassung durch den Abstand der in Längsrichtung des Führungsrohres angeordneten Spulen, deren Breite in Längsrichtung und dgl. bestimmt ist.

Dem Anmeldungsgegenstand liegt die Aufgabe zugrunde, eine Messvorrichtung der eingangs genannten Art dahingehend zu verbessern, dass in einfacher Weise neben der Position des Körpers relativ zum Behältnis in Längsrichtung auch dessen Position in Querrichtung relativ zum Behältnis mit relativ hoher Genauigkeit feststellbar ist.

Dieser Aufgabe wird im Zusammenhang mit den Merkmalen des Oberbegriffs des Anspruchs 1 dadurch gelöst, dass die Magneteinheiten einen maximalen magnetischen Fluss im wesentlichen senkrecht zur Richtung der Relativbewegung von Körper und Behältnis aufweisen. Dadurch wird einerseits das Magnetfeld und der magnetische Fluss geändert, wenn Körper und Behältnis sich so weit relativ zueinander bewegt haben, dass beide im Magnetfeld der magnetfeld-erzeugenden Magneteinheit angeordnet sind. Weiterhin ändert sich bei dieser Relativposition von Körper und Behältnis gleichzeitig das Magnetfeld senkrecht zur Relativbewegungsrichtung, so dass eine weitere Information über die Positionierung von Körper und Behältnis relativ zu einer senkrechten Relativbewegungsrichtung von der Auswerteeinrichtung erhältlich ist.

Erfindungsgemäß ist die Messvorrichtung unabhängig davon, ob dabei das beispielsweise rohrförmige Behältnis ortsfest ist und der Körper sich relativ zu diesem bewegt oder ob die Bewegungsverhältnisse umgekehrt sind. Zumindest der sich bewegende Teil sollte dabei ein magnetisches Material aufweisen, das zu einer entsprechenden Veränderung des Magnetfeldes zwischen den Magneteinheiten führt.

Bei Erdölbohrungen oder dgl. kann es sich in diesem Zusammenhang als vorteilhaft erweisen, wenn das insbesondere rohrförmige Behältnis die obige Führungsröhre und der Körper ein sich relativ zu diesem Rohr bewegendes Bauteil ist. Dieses sollte zumindest an der Stelle aus einem magnetischen Material gebildet sein oder ein solches aufweisen, welche Stelle zur Erfassung des Körpers hinsichtlich seiner Position und Orientierung relativ zum Behältnis dienen soll. Dies kann beispielsweise ein vorderes Ende des Körpers sein.

In der Regel bewegt sich ein solcher Körper innerhalb des Behältnisses, so dass die entsprechenden Magneteinheiten günstigerweise einer Innenseite des Behältnisses zugeordnet sein können. Sollte allerdings der sich bewegende Körper aus einem unmagnetischen Material hergestellt sein und das Behältnis an einer entsprechenden Stelle ein magnetisches Material aufweisen, können die entsprechenden Magneteinheiten auch auf einer Außenseite des Körpers angeordnet sein. Ebenso ist es möglich, dass die Magneteinheiten zur vereinfachten Zugänglichkeit auf einer Außenseite des Behältnisses angeordnet sind und das erzeugte Magnetfeld sich durch die Wandung des Behältnisses bis in dessen Inneres erstreckt.

Eine einfache Anordnung zur genauen Erfassung des sich bewegenden Körpers ist denkbar, bei der die Magneteinheiten in wenigstens einer Anordnungsebene senkrecht zur Relativbewegungsrichtung angeordnet sind. Beispielsweise kann eine Mehrzahl solcher Magneteinheiten kreisförmig oder in anderer Weise in Abhängigkeit von dem Querschnitt des Behältnisses angeordnet sein, wobei eine gleichbeabstandete Anordnung der Magneteinheiten in Umfangsrichtung des Behältnisses möglich ist.

Um den Körper nicht nur im wesentlichen im Bereich dieser einen Anordnungsebene zu erfassen, können Magneteinheiten in voneinander in Relativbewegungsrichtung beabstandeten Anordnungsebenen senkrecht zur Relativbewegungsrichtung angeordnet sein. Dadurch kann sowohl in jeder dieser Anordnungsebenen eine Erfassung als auch eine Erfassung zwischen den Anordnungsebenen durch entsprechend miteinander verschaltete Magneteinheiten erfolgen.

Je nach Ausbildung der Magneteinheit ist es dabei möglich, dass eine solche Magneteinheit zwischen Magnetfelderzeugung und Magnetfeldmessung umschaltbar ist. Dies kann auch während einer Messung erfolgen. Es ist selbstverständlich, dass ein solches Umschalten der Magneteinheiten beispielsweise eine variable Polung der Magneteinheiten, Variationen in der Magnetfeldstärke oder dgl. umfasst.

Ein einfaches Ausführungsbeispiel für eine magnetfeld-erzeugende Magneteinheit kann durch einen Permanentmagneten realisiert werden.

Um mehr Möglichkeiten bei der Erfassung des Körpers zu erhalten, s. die vorangehenden Ausführungen, kann eine solche Magneteinheit eine elektrisch betreibbare Spule sein. Diese ist in einfacher Weise sowohl zur Magnetfelderzeugung als auch Magnetfeldmessung einsetzbar. Weiterhin lässt sich bei einer Spule leicht die Magnetfeldstärke oder die Polung verändern und magnetische Wechselfelder sind erzeugbar.

Um ein Magnetfeld genau und sowohl einfach als auch preiswert messen zu können, kann eine magnetfeld-messende Magneteinheit ein Magnetfeldsensor, insbesondere ein Hall-Element, sein. Solche Magnetfeldsensoren sind in erforderlicher Dichte und Anordnung einfach und preiswert beispielsweise auf einer Innenseite des Behältnisses anordbar.

Statt einer Messung des Magnetfeldes bzw. des magnetischen Flusses kann durch eine entsprechende Magneteinheit natürlich auch eine magnetische Dämpfung erfassbar sein.

Um das Magnetfeld und damit den magnetischen Fluss in Richtung senkrecht zur Relativbewegungsrichtung zu verstärken, kann die Magneteinheit ein magnetisierbares Material aufweisen. Dies kann beispielsweise ein ferro- oder paramagnetisches Material sein.

Um nicht jeder Magneteinheit separat magnetisierbares Material zuordnen zu müssen, können die Magneteinheiten miteinander durch ein magnetisierbares Material bzw. ein magnetisch leitfähiges Material verbunden sein.

Um die Magneteinheit geschützt unterbringen zu können, kann sie beispielsweise in einer Radialbohrung des Behältnisses angeordnet sein. Die Radialbohrung ist zumindest so tief in Radialrichtung, dass die Magneteinheit vollständig in ihr anordbar ist und nicht in den Innenraum des Behältnisses vorsteht.

Um nicht eine entsprechende Anzahl von Radialbohrungen oder dgl. im Behältnis formen zu müssen und gleichzeitig eine größere Anzahl von Magneteinheiten gleichzeitig handhaben zu können, kann eine Anzahl solcher Magneteinheiten an einem Magnetmesseinsatz angeordnet sein, welcher beispielsweise in einer Umfangsausnehmung auf der Innenseite des Behältnisses einsetzbar ist. Diese Ausnehmung kann wiederum so tief sein, dass der Magnetmesseinsatz mit den Magneteinheiten nicht ins Innere des Behältnisses vorsteht.

Durch die entsprechenden Magneteinheiten sind Körper unterschiedlicher Querschnitte erfassbar. Bei Ölbohrungen oder dgl. ist es allerdings von Vorteil und gleichzeitig wird die Auswertung zur Erfassung des Körpers innerhalb des Behältnisses vereinfacht, wenn Behältnis und/oder Körper im wesentlichen rohrförmig ausgebildet sind. Bei einer Anwendung im Zusammenhang mit Erdöl- oder Gasbohrungen findet eine Führung des im wesentlichen rohrförmigen Körpers innerhalb des ebenfalls im wesentlichen rohrförmigen Behältnisses statt. Die Führung kann so erfolgen, dass der Körper an der Innenseite des Behältnisses anliegt oder zu dieser beabstandet ist.

Eine weitere einfache und platzsparende Ausbildungsform einer Magneteinheit kann darin gesehen werden, dass diese ein geästetes und/oder spiralförmig umlaufendes, elektrisch leitfähiges Band aufweist. Dieses Band entspricht im wesentlichen einer Spule und erzeugt ein vergleichbares Magnetfeld.

Um solche bandförmigen Magneteinheiten einfach handhaben zu können, kann ein solches Band auf einem insbesondere ringförmigen Einsatz angeordnet sein. Der Einsatz weist selbstverständlich eine Form entsprechend zum Querschnitt des Behältnisses auf, um in einfacher Weise insbesondere an einer Innenseite des Behältnisses angebracht zu werden.

Der Einsatz kann weiterhin zur Vereinfachung dazu dienen, dass auch entsprechende elektrische Leitungen zur Versorgung und/oder Ableitung von Signalen der bandförmigen Magneteinheiten am Einsatz angeordnet sind.

Analog besteht die Möglichkeit, dass bei dem obengenannten Magnetmesseinsatz zur Verwendung von elektrischen Spulen als Magneteinheiten Wickelfortsätze für solche elektrischen Spulen vorgesehen sind. Auf diese Wickelfortsätze sind die Spulen aufgewickelt, wobei die Wickelfortsätze gleichzeitig aus einem magnetisierbaren Material wie auch der gesamte Magnetmesseinsatz gebildet sein können.

Die Auswertung der von insbesondere den magnetfeld-messenden Magneteinheiten erhaltenen Signale kann nicht nur hinsichtlich der Positionsbestimmung des Körpers erfolgen. Um die Auswerteeinrichtung entsprechend auszustatten, kann diese eine Speichereinrichtung und/oder eine Anzeigeeinrichtung aufweisen oder mit dieser wie auch beispielsweise einem Computer verbindbar sein. In der Speichereinrichtung können entsprechende mathematische Auswertealgorithmen und/oder Kennfelder zur Auswertung der gemessenen Signale abgespeichert sein. Die Anzeigeeinrichtung kann beispielsweise zur grafischen Darstellung des Körpers bzw. zur Erfassung des Körpers dienen.

Die Auswerteeinrichtung kann dabei so ausgebildet sein, dass neben dem bloßen Vorhandensein des Körpers auch dessen Position, Form, Bewegungsrichtung oder Größe feststellbar sind.

Die Auswertung der Signale der Magneteinheiten sowie auch die Anordnung der Magneteinheiten ist dadurch vereinfacht, dass beispielsweise magnetische Achsen der Magneteinheiten auf eine in Längsrichtung des Behältnisses verlaufende Symmetrieachse ausgerichtet sind.

Vorteilhafte Ausführungsformen der Erfindung werden anhand der in der Zeichnung beigefügten Figuren im Folgenden näher beschrieben.

Es zeigen:

Fig. 1     eine perspektivische Seitenansicht eines ersten Ausführungsbeispiels einer erfindungsgemäßen Messvorrichtung in einem rohrförmigen Behältnis;

Fig. 2     einen horizontalen Schnitt durch Fig. 1 in Draufsicht;

Fig. 3     eine perspektivische Seitenansicht eines zweiten Ausführungsbeispiels einer erfindungsgemäßen Messvorrichtung;

Fig. 4     einen teilweise dargestellten Vertikalschnitt durch Fig. 3;

Fig. 5     eine perspektivische Seitenansicht eines dritten Ausführungsbeispiels einer erfindungsgemäßen Messvorrichtung;

Fig. 6     ein vergrößerte Darstellung des Details "A" aus Fig. 5;

Fig. 7     eine vergrößerte Darstellung des Details "B" aus Fig. 5;

Fig. 8     einen Horizontalschnitt durch eine erfindungsgemäße Messvorrichtung in Prinzipdarstellung;

Fig. 9     eine Darstellung nach Fig. 8 mit mittiger Anordnung eines Körpers;

Fig. 10    eine Darstellung nach Fig. 8 mit einer außermittigen Anordnung eines Körpers;

Fig. 11 l  eine Darstellung nach Fig. 8 mit einer weiteren außermittigen Anordnung eines Körpers;

Fig. 12    eine Darstellung nach Fig. 8 mit einer mittigen Anordnung eines weiteren Körpers;

Fig. 13    eine Prinzipdarstellung zur Erläuterung des magnetischen Flusses, und

Fig. 14    eine Detaildarstellung eines Flächenelements aus Fig. 13.

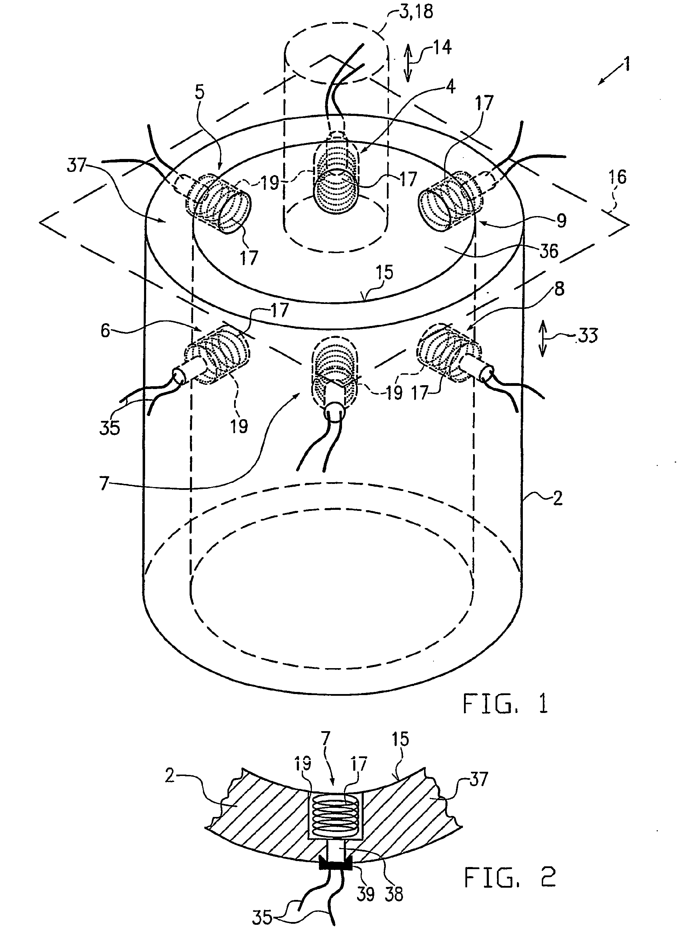

In Fig. 1 ist ein erstes Ausführungsbeispiel einer erfindungsgemäßen Messvorrichtung 1 für ein rohrförmiges Behältnis 2 mit einem ebenfalls rohrförmigen Körper 3 dargestellt. Das Behältnis 2 erstreckt sich beispielsweise von einer nicht dargestellten Plattform an der Meeresoberfläche bis zu einem Verankerungsrahmenteil am Meeresboden. Innerhalb des Behältnisses 2 ist in Längsrichtung 33 der Körper 3 in Relativbewegungsrichtung 14 geführt. Der Körper 3 ist beispielsweise ein Teil eines Bohrgestänges oder eines Werkzeugs oder dgl., wie es bei der maritimen Erdölbohrung benötigt wird.

In einer Anordnungsebene 16, die senkrecht zur Relativbewegungsrichtung 14 angeordnet ist, sind im Behältnis 2 eine Reihe von Magneteinheiten 4 bis 9 angeordnet. Diese sind in entsprechenden Radialbohrungen des Behältnisses 2 untergebracht und weisen zumindest eine elektrische Spule 17 auf. Die entsprechenden Spulenachsen liegen in der Anordnungsebene 16 und weisen zur Mitte der Längsbohrung 36. Alle Magneteinheiten 4 bis 9 sind entlang eines innenumfangs des Behältnisses 2 auf dessen Innenseite 15 gleich beabstandet voneinander angeordnet. Die Spulen 17 sind innerhalb der Radialbohrung 19 angeordnet, so dass die Magneteinheiten 5 bis 9 nicht über die Innenseite 15 in die Längsbohrung 36 vorstehen.

Jede der Spulen 17 ist entsprechend mit elektrischen Leitungen 35 verbunden, die relativ zum Behältnis 2 nach außen geführt sind und dort in nicht dargestellten Sammelleitungen zusammengefasst und beispielsweise an die Meeresoberfläche geführt sind.

Zumindest die Magneteinheit 4 ist eine magnetfeld-erzeugende Magneteinheit. Deren Magnetfeld wird durch den Körper 3, der zumindest teilweise aus einem magnetisierbaren oder magnetisch leitenden Material 18 gebildet ist, verändert und das sich durch die Bewegung und die Anordnung des Köpers 3 relativ zur Längsbohrung 36 verändernde Magnetfeld ist durch die magnetfeld-messenden Magneteinheiten 6 bis 9 erfassbar. D.h., die Magneteinheiten 5 bis 9 geben über ihre elektrischen Leitungen 35 eine entsprechende Induktionsspannung aufgrund des sie durchsetzenden und sich zeitlich ändernden magnetischen Flusses ab.

Statt eine Anordnung der magnetfeld-erzeugende Magneteinheit 4 und der entsprechenden magnetfeld-messenden Magneteinheiten 5 bis 9 in einer Anordnungsebene 16 nach Fig. 1, können beispielsweise auch die magnetfeld-messenden Magneteinheiten ganz oder teilweise in anderen Anordnungsebenen angeordnet sein, die gegenüber der Anordnungsebene 16 nach Fig. 1 nach oben und/oder unten versetzt und zu dieser beabstandet sind.

In Fig. 2 ist ein horizontaler Schnitt durch Fig. 1 im Bereich der Anordnungsebene 16 dargestellt. Insbesondere ist der Schnitt im Bereich der Magneteinheit 7 dargestellt. Die Radialbohrung 19 in einer Wandung 37 des Behältnisses 2 ist in Richtung Innenseite 15 geöffnet und auf ihrer gegenüberliegenden Seite mit einer Leitungsbohrung 38 verbunden. Diese dient zur Durchführung der elektrischen Leitungen 35 von der Spule 17 nach außen, d.h. weg von der Längsbohrung 36. Die Leitungsbohrung 38 ist durch eine Verschlusskappe 39 verschließbar, in der die elektrischen Leitungen 35 dicht hindurchgeführt sind.

Die magnetfeld-erzeugende Magneteinheit 4, s. Fig. 1, ist analog aufgebaut. An dieser Stelle sei angemerkt, dass alle Magneteinheiten nach Fig. 1 jeweils als magnetfeld-erzeugende oder magnetfeld-messende Magneteinheiten einsetzbar sind. Beispielsweise können die Magneteinheiten 6, 7 und 8 als magnetfeld-messende und die Magneteinheiten 4, 5 und 9 als magnetfeld-erzeugende Einheiten eingesetzt werden. Beliebige andere Einteilungen dieser Magneteinheiten sowohl vor als auch während einer entsprechenden Messung sind offensichtlich.

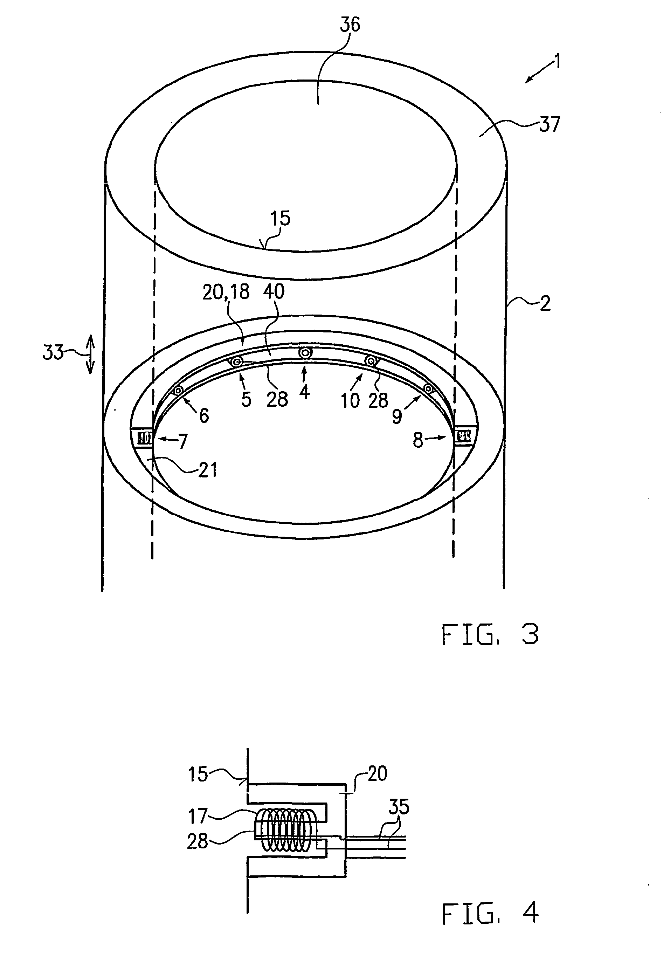

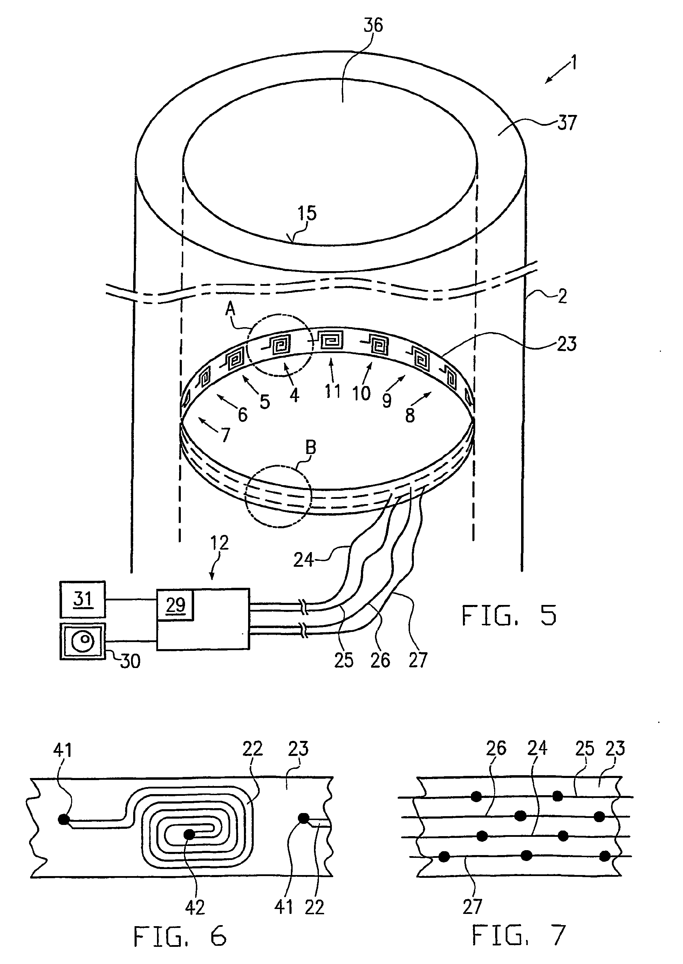

In Fig. 3 ist eine perspektivische Ansicht entsprechend zu Fig. 1 für ein zweites Ausführungsbeispiel der erfindungsgemäßen Messvorrichtung 1 dargestellt. In dieser Figur wie in den folgenden Figuren sind jeweils gleiche Teile, s. auch Fig. 1 und 2 , durch gleiche Bezugszeichen versehen. Diese werden nur noch teilweise erwähnt.

Fig. 3 unterscheidet sich von Fig. 1 durch das Zusammenfassen der Magneteinheiten 4 bis 10 in einem Magnetmesseinsatz 20 aus einem magnetisierbaren oder magnetisch leitenden Material 18. Der Magnetmesseinsatz 20 ist an entsprechender Stelle des Behältnisses 2 in einer Umfangsausnehmung 21 auf dessen Innenseite 15 in die Wandung 37 eingesetzt. Der Magnetmesseinsatz 20 weist einen in etwa U-förmigen Querschnitt auf. Die U-Öffnung ist in Richtung Längsbohrung 36 nach innen gerichtet. In der zwischen den U-Schenkeln gebildeten Ringspaltöffnung 40 ist stellenweise ein Wickelfortsatz 28 aus magnetisierbarem Material angeordnet. Dieser erstreckt sich parallel zu den U-Schenkeln in Richtung Längsbohrung 36 radial nach innen. Auf jedem dieser Wickelfortsätze 28 ist eine Spule 17 einer entsprechenden Magneteinheit 4 bis 10 aufgewickelt. Die Anordnung dieser Magneteinheiten bzw. Spulen erfolgt analog zu Fig. 1 in einer Anordnungsebene 16. Es sei nochmals darauf hingewiesen, dass entsprechende Magnetmesseinsätze in mehr als einer Anordnungsebene angeordnet sein können.

In Fig. 4 ist ein Vertikalschnitt durch das Ausführungsbeispiel nach Fig. 3 teilweise dargestellt. Insbesondere ist sichtbar, dass die Spule 17 auf den Wickelfortsatz 28 aufgewickelt und das entsprechende elektrische Leitungen 35 der Spule 17 durch eine Bohrung in der Wandung 37 radial nach außen relativ zum Behältnis 2 geführt sind. Wie bereits im Zusammenhang mit Fig. 1 erläutert, können die verschiedenen Magneteinheiten 4 bis 10 wahlweise als magnetfeld-erzeugende oder magnetfeld-messende Einheiten geschaltet sein.

In Fig. 5 ist eine perspektivische Ansicht analog zu Fig. 1 und 3 auf ein drittes Ausführungsbeispiel der erfindungsgemäßen Messvorrichtung 1 dargestellt.

Bei diesem Ausführungsbeispiel sind die Magneteinheiten 4 bis 11 als Bänder 22 durch Dünnschichttechnologie oder dgl. auf einem Einsatz 23 ausgebildet. Die Bänder 22 verlaufen geästet und/oder spiralförmig. An einem Ende weist jedes Band einen Anschlusskontakt 41 und am anderen Ende einen entsprechenden Anschlusskontakt 42 zur elektrischen Versorgung bzw. zur Abgabe von Messsignalen auf. Die Anschlusskontakte 41, 42, s. beispielsweise Fig. 6, sind auf einer der Längsbohrung 36 gegenüberliegenden Außenseite des Einsatzes 23 mit elektrischen Versorgungsleitungen 24, 25 bzw. elektrischen Messleitungen 26, 27 verbunden. Da die entsprechenden elektrischen Leitungen 24, 25 und 26, 27 auch umgekehrt als elektrische Mess- bzw. elektrische Versorgungsleitung geschaltet werden können, kann dadurch eine entsprechende Auswahl bezüglich der Magneteinheiten 4 bis 11 zur Magnetfelderzeugung bzw. Magnetfeldmessung durchgeführt werden.

Der Einsatz 23 ist aus einem dünnen Ring aus magnetisierbarem Material gebildet, der in ein einfacher Weise auf der Innenseite 15 des Behältnisses 2 an im wesentlichen beliebiger Stelle anordbar ist. Entsprechende weitere Einsätze 23 sind in weiteren Anordnungsebenen, s. die Ausführungen zu Fig. 1 und 3, anordbar.

An einer Stelle des Einsatzes 23 ist dieser mit seinen Leitungen 24 bis 27 mit einer Auswerteeinrichtung 12 verbunden. Diese ist insbesondere bei einer maritimen Erdölbohrung an der Meeresoberfläche auf einer entsprechenden Plattform angeordnet. Bei anderen Einsätzen der erfindungsgemäßen Messvorrichtung 1, beispielsweise für terrestrische Bohrungen, ist die Auswerteeinrichtung 12 an entsprechend gut zugänglicher Stelle angeordnet.

Die Auswerteeinrichtung 12 weist bei dem Ausführungsbeispiel nach Fig. 5 beispielsweise eine Speichereinrichtung 29 zur Speicherung der erhaltenen Messsignale oder zur Speicherung entsprechender Auswerteprogramme für die Messsignale auf. Die entsprechend aufbereiteten Messsignale sind mittels einer mit der Auswerteeinrichtung 12 verbundenen Anzeigeeinrichtung 30 darstellbar. Weiterhin kann die Auswerteeinrichtung 12 computerisiert sein oder mit einem externen Computer 31 verbunden sein, über den beispielsweise eine Programmierung der Auswerteeinrichtung zur entsprechenden Schaltung der Magneteinheiten zur Magnetfelderzeugung oder Magnetfeldmessung durchgeführt werden kann.

An dieser Stelle sei darauf hingewiesen, dass die Magneteinheiten zur Magnetfelderzeugung beispielsweise auch durch Permanentmagnete gebildet sein können. Ebenso können die Magneteinheiten zur Magnetfeldmessung durch Magnetsensoren, wie beispielsweise Hall-Elemente, gebildet sein.

Durch die Auswerteeinrichtung 12 besteht außerdem die Möglichkeit, das erzeugte Magnetfeld in der Polung oder der Feldstärke zu ändern. Ebenso sind magnetische Wechselfelder möglich.

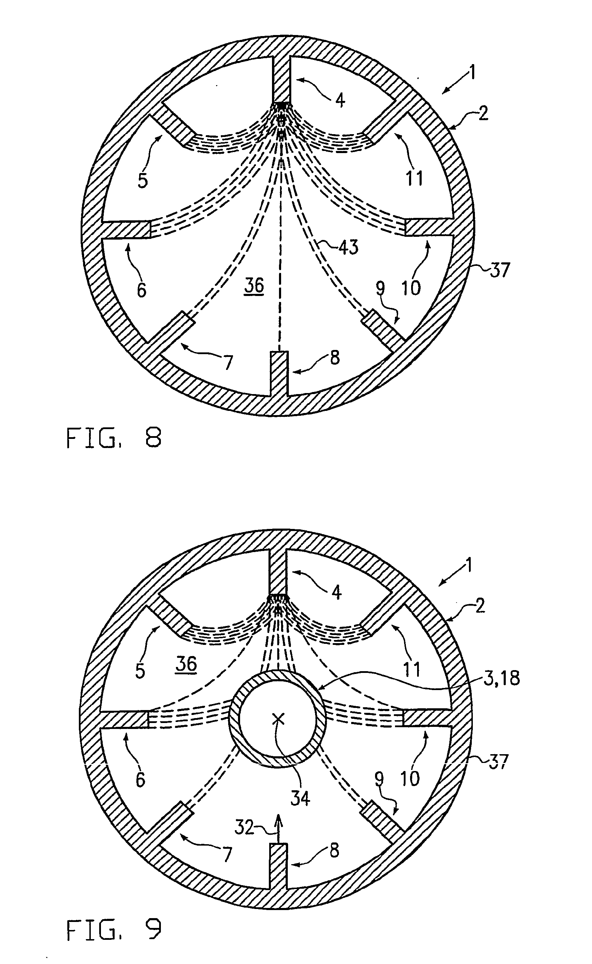

In den Fig. 8 bis 12 ist die erfindungsgemäße Messvorrichtung 1 mit prinzipieller Darstellung verschiedener Magneteinheiten 4 bis 11 ohne Körper 3 (Fig. 8) und mit verschiedenen Körpern in verschiedenen Positionen innerhalb des Behältnisses 2 dargestellt.

In Fig. 8 ist das von der Magneteinheit 4 erzeugte Magnetfeld ohne Beeinflussung durch einen Körper 3, s. beispielsweise Fig. 1, dargestellt. Die entsprechenden Magnetfeldlinien 43 erstrecken sich quer zur Längsbohrung 36 und münden in entsprechenden magnetfeldmessenden Magneteinheiten 5 bis 11. Je nach Entfernung der magnetfeld-messenden Magneteinheiten 5 bis 11 von der magnetfeld-erzeugenden Magneteinheit 4 durchsetzen mehr oder weniger Magnetfeldlinien die Magneteinheiten. Entsprechend ist der zugeordnete magnetische Fluss unterschiedlich.

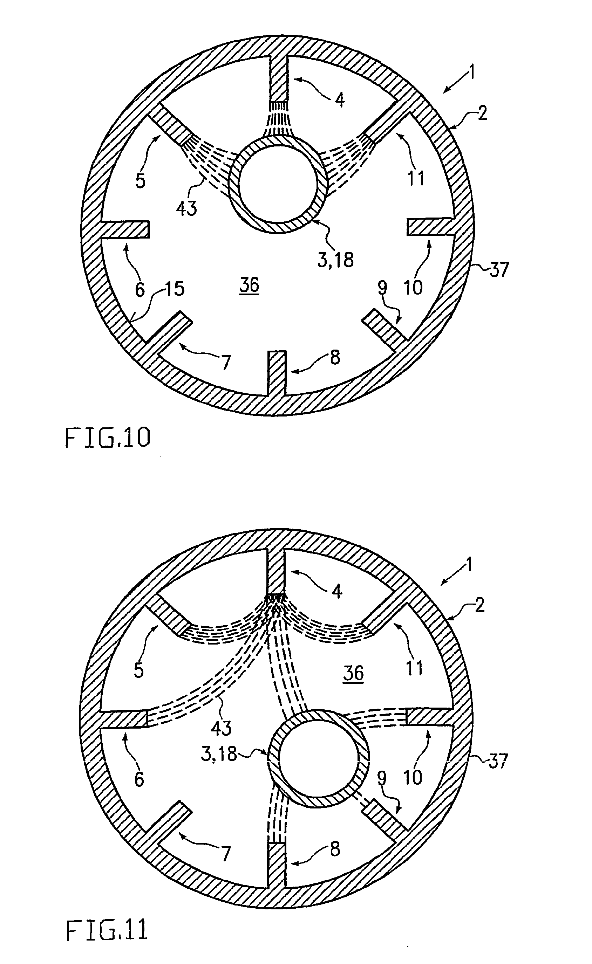

Die Magneteinheiten 4 bis 11 sind so angeordnet, dass dieser und insbesondere die ihnen zugeordneten magnetischen Achsen 32, s. beispielsweise Fig. 9, auf einen Mittelpunkt 34 der Längsbohrung 36 bzw. auf eine in Längsrichtung 33, s. Fig. 1, verlaufende Symmetrieachse 34 weisen.

Bei Bewegung eines Körpers 3 relativ zum Behältnis 2 ergeben sich unterschiedlich verlaufende Magnetfeldlinien, s. die Fig. 9 bis 11. In Fig. 9 ist der Körper 3 konzentrisch zur Mitte 34 angeordnet und führt zu einer entsprechend symmetrischen Verteilung der Magnetfeldlinien. In Fig. 10 ist der Körper 3 außermittig und angenähert an die magnetfeld-erzeugende Magneteinheit 4 dargestellt.

In Fig. 11 ist der Körper 3 in einer weiteren außermittigen Stellung angenähert an die magnetfeld-messende Magneteinheit 9 dargestellt.

Durch die entsprechende Änderungen der Magnetfelder und des magnetischen Flusses, die durch die magnetfeld- bzw. magnetischen Fluss messenden Einheiten 5 bis 11 erfassbar sind, ergeben sich Rückschlüsse auf das Vorhandensein des Körpers 3 im Bereich der Magneteinheit und darüber hinaus über die Abstände des Körpers 3 zu den Magneteinheiten, die Lage und Dimension des Körpers 3 sowie dessen Bewegungsrichtung. Durch entsprechende bildgebende Verfahren innerhalb der Auswerteeinrichtung 12, s. beispielsweise Fig. 5, ist der Körper 3 in seiner Lage, Dimension und Bewegung auf der Anzeigeeinrichtung 30 darstellbar.

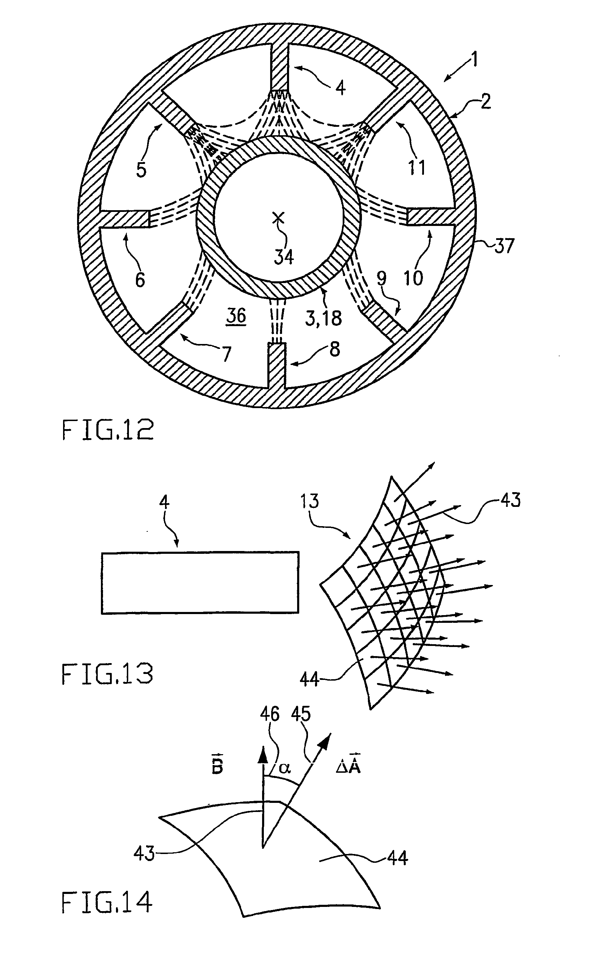

In Fig. 12 ist ein entsprechender Körper 3 mit größeren Dimensionen und größerer Wandstärke dargestellt, was zu entsprechenden Änderungen im Magnetfeld und im entsprechenden magnetischen Fluss führt. Daraus sind entsprechende Rückschlüsse auf die anderen Dimensionen des Körpers 3 nach Fig. 12 möglich.

In Fig. 13 ist vereinfacht eine magnetfeld-erzeugende Magneteinheit 4 mit dem von ihr erzeugten Magnetfeld, s. die Magnetfeldlinie 43, und dem zugeordneten magnetischen Fluss 13 durch verschiedene Flächenelemente 44 dargestellt. Bekannterweise ergibt sich der magnetische Fluss nach folgender Gleichung:

$$\Phi = \int \vec{B} \cdot d\vec{A}$$

wobei

$\Phi$ der magnetische Fluss, $\vec{B}$ die magnetische Induktion und $d\vec{A}$ ein infinitesimales, vektorielles Flächenelement ist. Erfindungsgemäß sind die Magneteinheiten 4 bis 11 so angeordnet, dass der entsprechende magnetische Fluss senkrecht zur Relativbewegungsrichtung von Körper und Behältnis seinen Maximalwert aufweist, d.h. dass das skalaren Produkt aus magnetischer Induktion und vektoriellem Flächenelement für die entsprechenden Flächenelemente, s. Fig. 13, den maximalen Wert annimmt.

In Fig. 14 ist prinzipiell dargestellt, dass sich für jedes Flächenelement 44 der magnetische Fluss aus dem skalaren Produkt von magnetischer Induktion $\vec{B}$ und $\Delta\vec{A}$ als vektoriellem Flächenelement ergibt. Dabei gilt folgende Gleichung:

$$\Phi = \left|\vec{B}\right| \cdot \left|\Delta\vec{A}\right| \cdot \cos\alpha,$$

wobei

$\alpha$ der entsprechende Winkel 46 zwischen den Vektoren $\vec{B}$ und $\Delta\vec{A}$ ist.

Im Folgenden wird kurz die Funktionsweise der erfindungsgemäßen Messvorrichtung anhand der beigefügten Figuren erläutert.

Die erfindungsgemäße Messvorrichtung misst über den magnetischen Fluss und/oder die magnetische Dämpfung beliebige Körper jeder Form und Lage in Ort und Geometrie in einem innerhalb eines Behältnisses 2 erzeugten Magnetfeld. Eine oder mehrere Magneteinheiten, dienen zur Erzeugung des Magnetfelder und des entsprechenden magnetischen Flusses. Eine oder mehrere weitere Magneteinheiten empfangen den durch den Körper und dessen Bewegung bzw. Anordnung veränderten magnetischen Fluss und aufgrund der entsprechenden Messsignale sind die Abstände des Körpers zu diesen Magneteinheiten, seine Lage, Dimension und Bewegungsrichtung erfassbar. Die Messung über den magnetischen Fluss kann statisch und/oder dynamisch über Wechselfelder, variable Feldstärke und variable Polung erfolgen.

Die magnetfeld-erzeugenden Magneteinheiten können beispielsweise Permanentmagneten oder elektrisch betreibbare Spule sein. Die magnetfeld-messenden Magneteinheiten können den entsprechenden magnetischen Fluss statisch als Hall-Element und/oder dynamisch über elektromagnetische Induktion messen. Die Konfiguration und Anzahl der magnetfeld-erzeugenden bzw. magnetfeld-messenden Magneteinheiten ist variabel, wobei insbesondere bei Spulen als Magneteinheiten ein Umschalten zwischen magnetfeld-erzeugenden und magnetfeld-messenden Magneteinheiten einfach möglich ist.

Die Auswertung der entsprechenden Messsignale erfolgt über mathematische Funktionen und/oder Kennfelder und sie können grafisch als Form und Lage des zu messenden Körpers auf einer entsprechenden Anzeigeeinrichtung, s. Fig. 5, dargestellt werden

Die Magneteinheiten können in einer oder mehreren Ebenen kreisförmig oder in anderer Weise angeordnet sein und sind in der Regel untereinander über ein magnetisch leitendes bzw. magnetisierbares Material verbunden. Durch die Anzahl der verschiedenen Magneteinheiten und deren Einsatz zur Magnetfelderzeugung und/oder Magnetfeldmessung ergeben sich magnetische Flüsse zwischen allen beteiligten Magneteinheiten, die und deren Änderungen zur Abbildung und Positionsbestimmung des zu messenden Körpers genutzt werden. Der variierende magnetische Fluss wird entsprechend messtechnisch ausgewertet, um Größe, Form und Position von sogenannten Drill Pipes mit deren Tool Joints sowie jeglichen Werkzeugen erkennen zu können. Ebenfalls eine Richtungserkennung beim Verfahren der Rohre oder Werkzeuge als Körper innerhalb des rohrförmigen Behältnisses ist möglich. Weiterhin können die Magneteinheiten solche sogenannten Drill Pipes erkennen, die an einer Innenseite des Behältnisses anliegen und so an der Ausrüstung den gefürchteten "Wash-Out" durch Wandreibung erzeugen.

**Patentansprüche**

1. Messvorrichtung (1) zur Erfassung eines sich relativ zu einem insbesondere rohrförmigen Behältnis (2) bewegenden Körpers (3) mit jeweils wenigstens einer dem Behältnis (2) und/oder dem magnetischen Körper (3) zugeordneten magnetfelderzeugenden und magnetfeld-messenden Magneteinheit (5-11) und zumindest einer mit den Magneteinheiten (5-11) verbundenen Auswerteeinrichtung (12) zum Empfang von Messsignalen der Magneteinheiten, **dadurch gekennzeichnet,** **dass** die Magneteinheiten (5-11) einen maximalen magnetischen Fluss (13) im wesentlichen senkrecht zur Richtung (14) der Relativbewegung von Körper (3) und Behältnis (2) aufweisen und eine Anzahl von Magneteinheiten (5-11) in wenigstens einer Anordnungsebene (16) senkrecht zur Relativbewegungsrichtung (14) angeordnet sind.

2. Messvorrichtung nach Anspruch 1, **dadurch gekennzeichnet,** **dass** der Körper (3) zumindest teilweise aus einem magnetischen Material gebildet ist.

3. Messvorrichtung nach Anspruch 1 oder 2, **dadurch gekennzeichnet,** **dass** die Magneteinheiten (5-11) einer Innenseite (15) des Behältnisses (2) zugeordnet sind.

4. Messvorrichtung nach wenigstens einem der vorangehenden Ansprüche, **dadurch gekennzeichnet,** **dass** die Magneteinheiten (5-11) in voneinander in Relativbewegungsrichtung (14) beanstandeten Anordnungsebenen (16) senkrecht zur Relativbewegungsrichtung angeordnet sind.

5. Messvorrichtung nach wenigstens einem der vorangehende Ansprüche, **dadurch gekennzeichnet,** **dass** die Magneteinheit (5-11) zwischen Magnetfelderzeugung und Magnetfeldmessung umschaltbar ist.

6. Messvorrichtung nach wenigstens einem der vorangehenden Ansprüche, **dadurch gekennzeichnet,** **dass** die magnetfeld-erzeugende Magneteinheit (5 - 11) ein Permanentmagnet ist.

7. Messvorrichtung nach wenigstens einem der vorangehenden Ansprüche, **dadurch gekennzeichnet,** **dass** die Niagneteinheit (5 - 11) eine elektrisch betreibbare Spule (17) ist.

8. Messvorrichtung nach wenigstens einem der vorangehenden Ansprüche, **dadurch gekennzeichnet,** **dass** die magnetfeld-messende Einheit (5 - 11) ein Magnetfeldsensor, insbesondere eine Hall-Element ist.

9. Messvorrichtung nach wenigstens einem der vorangehenden Ansprüche, **dadurch gekennzeichnet,** **dass** eine magnetische Dämpfung von der magnetfeld-messenden Magneteinheit (5-11) erfassbar ist.

10. Messvorrichtung nach wenigstens einem der vorangehenden Ansprüche, **dadurch gekennzeichnet,** **dass** die Magneteinheit (5 - 11) ein magnetisierbares Material aufweist.

11. Messvorrichtung nach wenigstens einem der vorangehenden Ansprüche, **dadurch gekennzeichnet,** **dass** die Magneteinheiten (5 - 11) miteinander durch ein magnetisierbares Material verbunden sind.

12. Messvorrichtung nach wenigstens einem der vorangehenden Ansprüche, **dadurch gekennzeichnet,** **dass** die Magneteinheit (5 - 11) in einer radialen Bohrung (19) des Behältnisses (2) angeordnet ist.

13. Messvorrichtung nach wenigstens einem der vorangehenden Ansprüche, **dadurch gekennzeichnet,**

**dass** eine Anzahl von Magneteinheiten (5 - 11) an einem Magnetmesseinsatz (20) angeordnet sind, welcher in einer Umfangsausnehmung (21) auf der Innenseite (15) des Behältnisses (2) einsetzbar ist.

14. Messvorrichtung nach wenigstens einem der vorangehenden Ansprüche, **dadurch gekennzeichnet, dass** Behältnis (2) und/oder Körper (3) im wesentlichen rohrförmig ausgebildet und/oder ineinander geführt sind.

15. Messvorrichtung nach wenigstens einem der vorangehenden Ansprüche, **dadurch gekennzeichnet, dass** die Magneteinheit (5 - 11) ein geästetes und/oder spiralförmig umlaufendes, elektrisch leitfähiges Band (22) aufweist.

16. Messvorrichtung nach wenigstens einem der vorangehenden Ansprüche, **dadurch gekennzeichnet, dass** das Band (22) auf einem ringförmigen Einsatz (23) angeordnet ist.

17. Messvorrichtung nach wenigstens einem der vorangehenden Ansprüche, **dadurch gekennzeichnet, dass** elektrische Leitungen (24 - 27) am Einsatz (23) zur Versorgung und/oder Ableitung von Signalen der bandförmigen Magneteinheit (5 - 11) angeordnet sind.

18. Messvorrichtung nach wenigstens einem der vorangehenden Ansprüche, **dadurch gekennzeichnet, dass** der Magnetmesseinsatz (20) Wickelfortsätze (28) für elektrische Spulen (17) aufweist.

19. Messvorrichtung nach wenigstens einem der vorangehenden Ansprüche, **dadurch gekennzeichnet, dass** die Auswerteeinrichtung (12) eine Speichereinrichtung (29) und/oder eine Anzeigeeinrichtung (30) aufweist und/oder mit einem Computer (31) verbindbar ist.

20. Messvorrichtung nach wenigstens einem der vorangehenden Ansprüche, **dadurch gekennzeichnet, dass** eine magnetische Achse (32) der Magneteinheit (5 - 11) auf eine in Längsrichtung (33) des Behältnisses (3) verlaufende Symmetrieachse (34) gerichtet ist.

21. Messvorrichtung nach wenigstens einem der vorangehenden Ansprüche, **dadurch gekennzeichnet, dass** durch die Auswerteeinrichtung (12) Vorhandensein und/oder Position und/oder Form und/oder Bewegungsrichtung und/oder Größe des Körpers (3) feststellbar sind.

**Claims**

1. Measuring device (1) for detecting a body (3) moving relative to an, in particular tubular, container (2), comprising at least one respective magnetic field-generating and magnetic field-measuring magnet unit (5 - 11) associated with the container (2) and/or the magnetic body (3), and at least one evaluation device (12), connected to the magnet units (5 - 11), for receiving measurement signals from the magnet units, **characterised in that** the magnet units (5 - 11) have a maximum magnetic flux (13) substantially parallel to the direction (14) of relative movement of the body (3) and container (2), and a number of magnet units (5 - 11) are arranged in at least one arrangement plane (16) perpendicular to the direction of relative movement (14).

2. Measuring device according to Claim 1, **characterised in that** the body (3) is formed at least partially from a magnetic material.

3. Measuring device according to either Claim 1 or Claim 2, **characterised in that** the magnet units (5 - 11) are associated with an inside (15) of the container (2).

4. Measuring device according to at least one of the preceding claims, **characterised in that** the magnet units (5 - 11) are arranged in arrangement planes (16), set apart from one another in the direction of relative movement (14), perpendicular to the direction of relative movement.

5. Measuring device according to at least one of the preceding claims, **characterised in that** the magnet unit (5 - 11) may be switched between magnetic field generation and magnetic field measurement.

6. Measuring device according to at least one of the preceding claims, **characterised in that** the magnetic field-generating magnet unit (5 - 11) is a permanent magnet.

7. Measuring device according to at least one of the preceding claims, **characterised in that** the magnet unit (5 - 11) is an electrically operable coil (17).

8. Measuring device according to at least one of the preceding claims, **characterised in that** the magnetic field-measuring unit (5 - 11) is a magnetic field sensor, in particular a Hall element.

9. Measuring device according to at least one of the preceding claims, **characterised in that** magnetic damping may be detected by the magnetic field-measuring magnet unit (5 - 11).

10. Measuring device according to at least one of the preceding claims, **characterised in that** the magnet unit (5 - 11) comprises a magnetisable material.

11. Measuring device according to at least one of the preceding claims, **characterised in that** the magnet units (5 - 11) are interconnected by a magnetisable material.

12. Measuring device according to at least one of the preceding claims, **characterised in that** the magnet unit (5 - 11) is arranged in a radial bore (19) in the container (2).

13. Measuring device according to at least one of the preceding claims, **characterised in that** a number of magnet units (5 - 11) is arranged on a magnet measurement insert (20) which may be inserted in a circumferential recess (21) on the inside (15) of the container (2).

14. Measuring device according to at least one of the preceding claims, **characterised in that** the container (2) and/or body (3) are substantially tubular in their configuration and/or are guided within one another.

15. Measuring device according to at least one of the preceding claims, **characterised in that** the magnet unit (5 - 11) comprises a branched and/or helically revolving, electrically conductive strip (22).

16. Measuring device according to at least one of the preceding claims, **characterised in that** the strip (22) is arranged on an annular insert (23).

17. Measuring device according to at least one of the preceding claims, **characterised in that** electrical lines (24 - 27) are arranged on the insert (23) for supplying and/or diverting signals to/from the strip-shaped magnet unit (5 - 11).

18. Measuring device according to at least one of the preceding claims, **characterised in that** the magnet measurement insert (20) comprises winding extensions (28) for electrical coils (17).

19. Measuring device according to at least one of the preceding claims, **characterised in that** the evaluation device (12) comprises a storage device (29) and/or a display device (30) and/or is connectable to a computer (31).

20. Measuring device according to at least one of the preceding claims, **characterised in that** a magnetic axis (32) of the magnet unit (5 - 11) is oriented toward an axis of symmetry (34) extending in the longitudinal direction (33) of the container (3).

21. Measuring device according to at least one of the preceding claims, **characterised in that** the presence and/or position and/or shape and/or direction of movement and/or size of the body (3) may be determined by the evaluation device (12).

**Revendications**

1. Dispositif de mesure (1) pour détecter un corps (3) se déplaçant par rapport à un récipient (2) en particulier de forme tubulaire avec une unité magnétique (5-11) produisant un champ magnétique et mesurant le champ magnétique, associée respectivement au récipient (2) et/ou au corps magnétique (3), et au moins un dispositif d'exploitation (12), relié aux unités magnétiques (5-11) pour recevoir des signaux de mesure des unités magnétiques,
**caractérisé**
**en ce que** les unités magnétiques (5-11) présentent un flux magnétique (13) maximal sensiblement perpendiculaire à la direction (14) du mouvement relatif du corps (3) et du récipient (2), et un nombre d'unités magnétiques (5-11) est disposé dans au moins un plan de disposition (16) perpendiculaire à la direction (14) du mouvement relatif.

2. Dispositif de mesure selon la revendication 1,
**caractérisé**
**en ce que** le corps (3) est formé au moins en partie d'un matériau magnétique.

3. Dispositif de mesure selon la revendication 1 ou 2,
**caractérisé**
**en ce que** les unités magnétiques (5-11) sont associées à une face intérieure (15) du récipient (2).

4. Dispositif de mesure selon l'une au moins des revendications précédentes,
**caractérisé**
**en ce que** les unités magnétiques (5-11) sont disposées dans des plans de disposition (16), espacés les uns des autres dans la direction (14) du mouvement relatif et perpendiculaires à la direction du mouvement relatif.

5. Dispositif de mesure selon l'une au moins des revendications précédentes,
**caractérisé**
**en ce que** l'unité magnétique (5-11) est susceptible d'être commutée entre la production d'un champ magnétique et la mesure du champ magnétique.

6. Dispositif de mesure selon l'une au moins des revendications précédentes, **caractérisé en ce que** l'unité magnétique (5-11) produisant un champ magnétique est un aimant permanent.

**7.** Dispositif de mesure selon l'une au moins des revendications précédentes, **caractérisé en ce que** l'unité magnétique (5-11) est une bobine (17) à fonctionnement électrique.

**8.** Dispositif de mesure selon l'une au moins des revendications précédentes, **caractérisé en ce que** l'unité mesurant le champ magnétique (5-11) est un capteur de champ magnétique, en particulier un élément de Hall.

**9.** Dispositif de mesure selon l'une au moins des revendications précédentes, **caractérisé en ce qu'**un affaiblissement magnétique de l'unité magnétique (5-11) mesurant le champ magnétique est susceptible d'être détecté.

**10.** Dispositif de mesure selon l'une au moins des revendications précédentes, **caractérisé en ce que** l'unité magnétique (5-11) comporte un matériau magnétisable.

**11.** Dispositif de mesure selon l'une au moins des revendications précédentes, **caractérisé en ce que** les unités magnétiques (5-11) sont reliées entre elles par un matériau magnétisable.

**12.** Dispositif de mesure selon l'une au moins des revendications précédentes, **caractérisé en ce que** l'unité magnétique (5-11) est disposée dans un perçage radial (19) du récipient (2).

**13.** Dispositif de mesure selon l'une au moins des revendications précédentes, **caractérisé en ce qu'**un nombre d'unités magnétiques (5-11) est disposé sur un insert de mesure magnétique (20) qui peut être inséré dans un évidement périphérique (21) sur la face intérieure (15) du récipient (2).

**14.** Dispositif de mesure selon l'une au moins des revendications précédentes, **caractérisé en ce que** le récipient (2) et/ou le corps (3) sont réalisés en forme sensiblement tubulaire et/ou guidés l'un dans l'autre.

**15.** Dispositif de mesure selon l'une au moins des revendications précédentes, **caractérisé en ce que** l'unité magnétique (5-11) comporte une bande (22) électriquement conductrice, ramifiée et/ou tournant en spirale.

**16.** Dispositif de mesure selon l'une au moins des revendications précédentes, **caractérisé en ce que** la bande (22) est disposée sur un insert (23) de forme annulaire.

**17.** Dispositif de mesure selon l'une au moins des revendications précédentes, **caractérisé en ce que** des lignes électriques (24-27) sont disposées sur l'insert (23) pour l'alimentation et/ou la co-direction de signaux de l'unité magnétique (5-11) en forme de bande.

**18.** Dispositif de mesure selon l'une au moins des revendications précédentes, **caractérisé en ce que** l'insert de mesure magnétique (20) comporte des prolongements enroulés (28) pour des bobines électriques (17).

**19.** Dispositif de mesure selon l'une au moins des revendications précédentes, **caractérisé en ce que** le dispositif d'exploitation (12) comporte un dispositif à mémoire (29) et/ou un dispositif d'indication (30) et/ou est susceptible d'être relié à un ordinateur (31).

**20.** Dispositif de mesure selon l'une au moins des revendications précédentes, **caractérisé en ce qu'**un axe magnétique (32) de l'unité magnétique (5-11) est dirigé vers un axe de symétrie (34) s'étendant dans la direction longitudinale (33) du récipient (3).

**21.** Dispositif de mesure selon l'une au moins des revendications précédentes, **caractérisé en ce que** par le dispositif d'exploitation (12), la présence et/ou la position et/ou la forme et/ou la direction de déplacement et/ou la taille du corps (3) sont susceptibles d'être déterminées.

FIG. 1

FIG. 2

FIG. 3

FIG. 4

FIG. 5

FIG. 6

FIG. 7

FIG. 8

FIG. 9

FIG.10

FIG.11

FIG.12

FIG.13

FIG.14